# EUROPÄISCHE PATENTANMELDUNG

(11) **EP 4 549 120 A2**
(43) Veröffentlichungstag der Anmeldung: **07.05.2025**
(21) Anmeldenummer: 25165591.6
(22) Anmeldetag: 29.05.2020
(51) Int. Cl.: B29B 17/04

(54) **VERFAHREN ZUM BEREITSTELLEN EINES AUFBEREITETEN CELLULOSE-AUFWEISENDEN AUSGANGSSTOFFES MIT VORBESTIMMTER FASERLÄNGENVERTEILUNG**

(30) Priorität: 04.06.2019 EP 19178193
(62) Teilanmeldung aus: 20733535.7
(71) Anmelder: LENZING AKTIENGESELLSCHAFT, 4860 Lenzing (AT)
(72) Erfinder: Herchl, Richard, 4910 Ried im Innkreis (AT); Weilach, Christian, 4840 Vöcklabruck (AT)
(74) Vertreter: Dilg, Haeusler, Schindelmann Patentanwaltsgesellschaft mbH

(57) **Zusammenfassung**

Es wird ein Verfahren zum Bereitstellen eines aufbereiteten Cellulose-aufweisenden Ausgangsstoffes (110), insbesondere eines Ausgangsstoffes zum Bilden eines, insbesondere regenerierten, cellulosischen Formkörpers (102), beschrieben. Das Verfahren weist auf: i) Zuführen eines Cellulose-aufweisenden Ausgangsstoffes (101), welcher cellulosische Fasern aufweist, und Aufbereiten (20) des Cellulose-aufweisenden Ausgangsstoffs (101), um den aufbereiteten Cellulose-aufweisenden Ausgangsstoff (110) zu erhalten, derart, dass die Cellulose-Fasern des aufbereiteten Cellulose-aufweisenden Ausgangsstoffes (110) eine vorbestimmte Faserlängenverteilung aufweisen. Ferner werden ein Verfahren zum Herstellen eines cellulosischen Formkörpers (102), ein aufbereiteter Cellulose-aufweisender Ausgangsstoff (110), und ein Verwenden von Alttextilien beschrieben.

## Beschreibung

Die Erfindung betrifft ein Verfahren zum Bereitstellen eines aufbereiteten Cellulose-aufweisenden Ausgangsstoffes, insbesondere eines Ausgangsstoffes zum Bilden eines cellulosischen Formkörpers. Weiterhin betrifft die Erfindung ein Verfahren zum Herstellen eines (regenerierten) cellulosischen Formkörpers aus dem aufbereiteten Cellulose-aufweisenden Ausgangsstoff. Ferner betrifft die Erfindung den aufbereiteten Cellulose-aufweisenden Ausgangsstoff. Außerdem betrifft die Erfindung ein Verwenden von aufbereiteten Alttextilien zum Herstellen des cellulosischen Formkörpers. Insbesondere betrifft die Erfindung einen aufbereiteten Cellulose-aufweisenden Ausgangsstoff mit einer vorbestimmten Faserlängenverteilung.

Die Erfindung kann sich somit auf das technische Gebiet des Bereitstellens von aufbereiteten, Cellulose-haltigen Ausgangsstoffen beziehen. Insbesondere kann sich die Erfindung auf das technische Gebiet des Herstellens eines (regenerierten) cellulosischen Formkörpers aus einem aufbereiteten, Cellulose-haltigen Ausgangsstoff beziehen. Ferner kann sich die Erfindung auf das technische Gebiet des Recycelns von Feststoffen, insbesondere Alttextilien, beziehen.

Ein Cellulose-aufweisender aufbereiteter Ausgangsstoff, wie z.B. Zellstoff, kann als Basismaterial für die Herstellung cellulosischer Formkörper dienen. Diese Formkörper können beispielsweise Fasern (z.B. Lyocellfasern oder Viskosefasern) oder auch ein Papierstoff sein. Zunächst wird hierfür ein Cellulose-aufweisender Ausgangsstoff aufbereitet. Bei diesem Ausgangsstoff kann es sich z.B. um Holz, Altpapier oder Alttextilien handeln. Das Aufbereiten kann ein mechanisches und/oder ein chemisches Abtrennen von Bestandteilen des Ausgangsstoffes umfassen. Der aufbereitete Ausgangsstoff, wie z.B. Zellstoff, kann dann aus Fasern bestehen, welche einem weiteren Herstellungsverfahren zugeführt werden können. So kann der Zellstoff z.B. als Suspension über Pumpen und Ventile einem Nachfolgeprozess, zum Beispiel beim Herstellen einer Spinnmasse (für ein Viskoseverfahren und/oder ein Lyocellverfahren), zugeführt werden.

Nun kann es hierbei aber zu Problemen kommen, welche vor allem durch die Längen der Fasern verursacht werden. Im Falle von Alttextilien als Ausgangsstoff weisen diese neben Cellulosefasern, meist in Form von Baumwollfasern, auch synthetische Fasern wie Polyester auf. Native Baumwolle hat eine Faserlänge von etwa 40 mm, während Polyester als Endlosfilament hergestellt und dann zu Stapelfasern mit einstellbarer Faserlänge geschnitten wird. Durch diese besonders langen (Cellulose) Fasern kann es zu Verstopfungen während eines Aufbereitungsprozesses in den dabei verwendeten Aggregaten (Anlagen) kommen. Sind die Fasern andererseits zu kurz, so können diese viel Staub produzieren. Gleichzeitig weisen sehr kurze Fasern aber auch eine große Oberfläche auf und können daher schwierig zu entwässern sein, nachdem sie einmal ein flüssiges Medium aufgesogen haben. Ferner können kurze Fasern auch unabsichtlich abgetrennt werden, was zu Materialverlust und Umweltverschmutzung führen kann.

Bei zu langen Fasern kann es insbesondere zu sogenannten "Verzopfungen" kommen, wobei es sich um Faserknäuel handelt, die entstehen können, wenn sich Fasern umeinander wickeln. Dies kann insbesondere an Engstellen oder Totbereichen in Rohrleitungen auftreten, aber auch in Pumpen oder Ventilen. Diese Faserknäuel können in den Leitungen während eines Herstellungsprozesses (z.B. ein Lyocellverfahren) zu Verstopfungen führen, was wiederum mit einem hohen manuellen Reinigungsaufwand verbunden ist. Bei einem weiteren Verwenden der Fasern (z.B. als Spinnmasse zum Herstellen von Lyocellfasern) kann es zudem passieren, dass, wenn die Fasern zu lang sind, sie in einer gegebenen Reaktionszeit nicht vollständig gelöst werden, wodurch sich ein deutlich erhöhter Filtrationsaufwand für die Spinnmasse ergibt. Entsprechend werden die Produktionskosten deutlich erhöht, während gleichzeitig die Qualität des herzustellenden Produkts sinkt.

Zu kurze Fasern weisen im Gegensatz dazu eine viel zu große Oberfläche auf, so dass diese nur schwer entwässerbar sind, wodurch Lösungsmittel nicht effizient abgeführt werden können. Zudem können besonders kurze Fasern oder sehr kleine Faserpartikel (Feinstoff) im Zuge von Aufbereitungsprozessen über Abwässer ausgeschwemmt werden. Hierbei kann es zu einem beachtlichen Stoffverlust kommen. Ferner kann dadurch auch eine erhöhte Belastung der Abwässer mit Faserabfällen verursacht werden. Entsprechend sind konventionelle Lösungen ebenfalls mit hohen zusätzlichen Produktionskosten (insbesondere durch den Materialverlust) verbunden, während zusätzlich noch eine wenig ressourcenschonende und wenig umweltfreundliche Produktionsart vorliegt.

Es ist eine Aufgabe der vorliegenden Erfindung, einen Cellulose-aufweisenden aufbereiteten Ausgangsstoff (z.B. zum Herstellen eines (regenerierten) cellulosischen Formkörpers) auf effiziente, robuste, und ressourcensparende Weise bereitzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein Verfahren zum Bereitstellen eines aufbereiteten Cellulose-aufweisenden Ausgangsstoffes (insbesondere eines Ausgangsstoffes zum Bilden eines (weiter insbesondere regenerierten) cellulosischen Formkörpers) beschrieben. Das Verfahren weist auf: i) Zuführen (insbesondere Vorsortieren und/oder Zerkleinern) eines Cellulose-aufweisenden Ausgangsstoffes (z.B. Alttextilien, Altpapier, Holz), welcher cellulosische Fasern aufweist, und ii) Aufbereiten (umfassend z.B. ein Zerkleinern, ein Kochen, ein Vereinzeln, ein Kürzen von Fasern, ein selektives Abtrennen von Fasern) des Cellulose-aufweisenden Ausgangsstoffs, um den aufbereiteten Cellulose-aufweisenden Ausgangsstoff (z.B. einen Zellstoff) zu erhalten, derart, dass die Cellulose-Fasern des aufbereiteten Cellulose-aufweisenden Ausgangsstoffes eine vorbestimmte Faserlängenverteilung aufweisen.

Gemäß einem weiteren Aspekt der vorliegenden Erfindung ist ein Verfahren zum Herstellen eines (insbesondere regenerierten) cellulosischen Formkörpers beschrieben. Das Verfahren weist auf: i) Bereitstellen eines Cellulose-aufweisenden aufbereiteten Ausgangsstoffs wie oben beschrieben, und ii) Bilden des cellulosischen Formkörpers aus dem Cellulose-aufweisenden aufbereiteten Ausgangsstoff (z.B. mittels eines Lyocellverfahrens oder eines Viskoseverfahrens).

Gemäß einem weiteren Aspekt der vorliegenden Erfindung ist ein Cellulose-aufweisender aufbereiteter Ausgangsstoff zum Herstellen eines cellulosischen Formkörpers beschrieben. Der Cellulose-aufweisende aufbereitete Ausgangsstoff weist hierbei eine mittlere längengewichtete Faserlänge in dem Bereich 0,75 bis 2,5 mm, insbesondere 0,9 bis 1,75 mm, weiter insbesondere 1,0 bis 1,5 mm, auf.

Gemäß einem weiteren Aspekt der vorliegenden Erfindung ist ein Verwenden beschrieben von aufbereiteten Alttextilien mit einer mittleren längengewichteten Faserlänge in dem Bereich 0,75 bis 2,5 mm, insbesondere 0,9 bis 1,75 mm, weiter insbesondere 1,0 bis 1,5 mm, zum Herstellen eines cellulosischen Formkörpers.

Im Rahmen dieses Dokuments kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieses Dokuments kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper, Modal-Formkörper, oder Papierformkörper (Papierstoff) sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen, Papier, Karton, Filtern, oder Verbundwerkstoffen verwendet werden.

Im Rahmen dieses Dokuments kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihrem freien oder gesteuertem Fallen durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Lyocell bezeichnet eine Cellulose aufweisende Regeneratfasergattung, die nach einem Direkt-Lösemittelverfahren hergestellt wird. Die Cellulose wird für das Lyocell-Verfahren aus einem Rohstoff (z.B. Holz, Alttextilien...) extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend z.B. zu Stapelfasern geschnitten.

Im Rahmen dieses Dokuments kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält.

Im Rahmen dieses Dokuments kann unter dem Begriff "Viskoseverfahren" ein Xanthogenatverfahren verstanden werden. In aufeinanderfolgenden Prozessstufen kann bei dem Viskoseverfahren, welches als Xanthogenatverfahren durchgeführt wird, der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente. Die so hergestellten Viskose-Filamente werden im Anschluss z.B. zu Viskose-Stapelfasern geschnitten.

Im Rahmen dieses Dokuments kann unter dem Begriff "Viskoseverfahren" auch ein Carbamatverfahren verstanden werden, bei welchem anstelle von Schwefelkohlenstoff Ammoniak zur Herstellung eines löslichen Cellulosederivates eingesetzt wird. Dabei entsteht anstelle des Cellulose-Xanthogenats das sogenannte Cellulose-Carbamat. Analog der Weiterverwendung des Cellulose-Xanthogenats wird aus dem Cellulose-Carbamat eine spinnfähige Lösung hergestellt, aus welcher, nach dem Pressen durch eine oder mehrere Spinndüsen, in einem Spinnbad Cellulose-Filamente regeneriert werden können.

Weiter kann im Rahmen dieses Dokuments unter dem Begriff "Viskoseverfahren" auch ein Kaltalkaliverfahren verstanden werden, bei welchem Cellulose ohne weitere Derivatisierung zum Xanthogenat oder Carbamat in einem temperierten, insbesondere gekühlten, wässrigen alkalischen Medium in Lösung gebracht wird. Die Temperatur des wässrigen alkalischen Mediums beträgt in einem Ausführungsbeispiel weniger als 20° C, insbesondere auch weniger als 5° C. Zur Verbesserung des Löseverhaltens können dem wässrigen alkalischen Medium Zusätze wie z.B. Harnstoff, Thioharnstoff, Zinkoxid, Polyethylenglykol oder Tenside beigefügt werden. Wiederum werden aus der Cellulose enthaltenden Spinnlösung, nach dem Durchtritt durch eine oder mehrere Spinndüsen, mittels Fällung in einem sauren oder alkalischen Spinnbad Cellulose-Filamente regeneriert.

Als Viskosefasern werden Chemiefasern bzw. Regeneratfasern bezeichnet, die mittels eines Viskoseverfahrens (insbesondere eines Xanthogenatverfahrens, eines Carbamatverfahrens, oder eines Kaltalkaliverfahrens) genannten Nassspinnverfahrens hergestellt werden. Der Ausgangsrohstoff des Viskoseverfahrens ist hochreine Cellulose in Form von Chemiezellstoff.

Im Rahmen dieses Dokuments kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieses Dokuments können unter dem Begriff "Altkleider" insbesondere Cellulose aufweisende Kleidungsstücke oder Heimtextilien (z.B. Bettwäsche) verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieses Dokuments können unter dem Begriff "Alttextilien" sowohl "Altkleider" als auch "Reste einer Kleiderherstellung" verstanden werden.

Im Rahmen dieses Dokuments können unter dem Begriff "Textilien" sowohl "Neutextilien" als auch "Altkleider" und "Reste einer Kleiderherstellung" verstanden werden.

Der Begriff "Neutextilien" umfasst textile Rohstoffe (Naturfasern, Chemiefasern), und nichttextile Rohstoffe, die durch ein oder mehr Verfahren zu linien-, flächenförmigen oder räumlichen Produkten verarbeitet wurden. Der Begriff "Neutextilien" kann sich sowohl mit dem Begriff "Ausschuss aus der Kleiderherstellung" decken als auch fertige Produkte (z.B. Kleidung, Bettwäsche) bezeichnen, wobei letztere im Wesentlichen noch nicht von einem Benutzer verwendet/getragen wurden. In einem Ausführungsbeispiel wird zwischen Alttextilien und Neutextilien unterschieden. In einem anderen Ausführungsbeispiel kann der Begriff Alttextilien auch diese Neutextilien umfassen (fertige Textil-Produkte, welche nicht verwendet werden, können ebenfalls als Alttextilien bzw. Kleidungsauschuss verstanden werden).

Im Rahmen dieses Dokuments kann unter dem Begriff "Papierherstellung" insbesondere verstanden werden, dass aus einem Cellulose-haltigen und aufbereiteten Ausgangsstoff ein cellulosischer Formkörper gebildet wird, bei welchem es sich um einen Papierstoff handelt. Ein "Papierstoff" kann in diesem Zusammenhang als ein Papierausgangsstoff verstanden werden, aus welchem dann ein Papierprodukt wie z.B. ein Papier, ein Karton, ein Filter oder dergleichen gebildet werden kann. Ein Papierstoff kann ein Verbundmaterial sein, das zumindest Zellstoff (Cellulose) und einen Binder enthält. Ein "Papierstoff" kann auch Papier oder papierähnliche Materialien, sowie Karton, Filtermaterial, Isolationsmatten, Saugvliese, faserverstärkte Flachmaterialien usw. umfassen. Papierstoff kann durch Entwässerung einer Fasersuspension, z.B. auf einem Sieb, gebildet werden. Ein Papierstoff kann ein flächiger Werkstoff (Faservlies) sein, der im Wesentlichen aus (Cellulose-) Fasern besteht. Der Papierstoff kann in folgenden Arbeitsschritten weiter verdichtet und getrocknet werden. Alle Bearbeitungsschritte, welche von einem cellulosischen Formkörper zu einem Papierstoff führen, können also als Papierherstellungsverfahren bezeichnet werden. Ferner können auch alle Bearbeitungsschritte, welche von einem cellulosischen Formkörper zu einem Papier bzw. von einem Papierstoff zu einem Papierprodukt führen, als Papierherstellung bezeichnet werden.

Im Rahmen dieses Dokuments kann unter dem Begriff "Aufbereiten" insbesondere verstanden werden, dass ein eingehender Ausgangsstoff derart behandelt (aufbereitet) wird, dass sich ein ausgehender, aufbereiteter Ausgangsstoff in seinen chemischen/physikalischen Eigenschaften bzw. in seiner stofflichen Zusammensetzung zumindest teilweise von dem eingehenden Ausgangsstoff unterscheidet. Ein Aufbereitungsprozess kann den Schritt eines Zerkleinerns von einem Ausgangsmaterial umfassen, z.B. ein Schreddern von Alttextilien. Weiterhin kann ein Aufbereitungsprozess ein Vereinzeln und ein Schneiden von Cellulosefasern aufweisen. Während eines Aufbereitungsprozesses kann beispielsweise ein Koch-Prozess, insbesondere eine alkalische Kochung, durchgeführt werden. Ferner können beispielsweise während eines Aufbereitungsprozesses synthetische Fasern wie Polyester von Cellulose (mittels der Kochung) abgereichert werden. Weiterhin kann ein Aufbereitungsprozess auch mechanische Trennschritte wie Dichtetrennung umfassen. Alternativ oder ergänzend zu dem Koch-Prozess können somit z.B. synthetische Fasern oder andere Fremdstoffe mechanisch entfernt werden. Weiterhin kann ein Aufbereiten ein Kürzen von Cellulosefasern auf eine vorbestimmte Faserlängenverteilung umfassen.

Im Rahmen dieses Dokuments kann unter dem Begriff "vorbestimmte Faserlängenverteilung" insbesondere verstanden werden, dass die Längen von (Cellulose) Fasern in einem aufbereiteten Ausgangsstoff im Wesentlichen in einem vordefinierten (i.e. bewusst ausgewählten) Bereich liegen. Der Begriff "Faserlänge" kann sich hierbei auf die Länge von Cellulose-Fasern, aber auch auf die Länge von synthetischen Fasern (Kunststoff) beziehen. Weiterhin kann der Begriff "Längenverteilung" sich beispielsweise auf einen mittleren Wert (Durchschnittswert) der Faserlänge (längengewichtet) beziehen. Dieser Durchschnittswert kann dann in einem bestimmten bzw. vordefinierten Längenbereich liegen. So kann beispielsweise vorbestimmt werden, dass die mittlere längengewichtete Faserlänge in dem Bereich 0,75 - 2,5 mm ist. Ferner kann auch vorbestimmt werden, dass ein gewisser Anteil (z.B. ein bestimmter Prozentsatz) der Fasern eine bestimmte Längenbedingung erfüllt. So kann beispielsweise vorbestimmt werden, dass der Anteil von Fasern unter 0,2 mm Länge nicht mehr als 11% des aufbereiteten Ausgangsstoffes ausmachen darf.

Gemäß einem exemplarischen Ausführungsbeispiel der Erfindung wird ein Cellulose-aufweisender aufbereiteter Ausgangsstoff (z.B. zum Herstellen eines (regenerierten) cellulosischen Formkörpers) auf besonders effiziente, ressourcensparende und nachhaltige Weise bereitgestellt, wenn die Prozessbedingungen des Aufbereitens so eingestellt werden, dass der aufbereitete Ausgangsstoff (z.B. Zellstoff) eine vorbestimmte Faserlängenverteilung aufweist. Die vorbestimmte Faserlängenverteilung kann hierbei genau so eingestellt werden, dass erwünschte und vorteilhafte Eigenschaften des aufbereiteten Ausgangsstoffes begünstigt werden. Während bislang lediglich die Faserlänge eines hergestellten cellulosischen Formkörpers eingestellt wurde (z.B. Stapelfasern), hat es sich überraschenderweise herausgestellt, dass ein Einstellen einer genau definierten Faserlängenverteilung bereits in einem Ausgangsstoff zum Herstellen des cellulosischen Formkörpers (also um einige Prozessstufen vorgelagert) eine Vielzahl von Vorteilen beim Herstellen des cellulosischen Formkörpers aus dem Ausgangsstoff bereitstellt.

Die Einstellung einer gewissen maximalen Faserlänge kann vorteilhaft sein, um den oben erwähnten "Verzopfungen" vorzubeugen. Diese Faserknäuel können entstehen, wenn sich insbesondere sehr lange Fasern umeinander wickeln. Dies kann insbesondere an Engstellen oder Totbereichen in Zuführsystemen auftreten und dort zu Verstopfungen führen, was dann mit einem hohen manuellen Reinigungsaufwand verbunden ist.

Die Einstellung einer gewissen minimalen Faserlänge hingegen kann vorteilhaft sein, um Materialverluste zu vermeiden. Insbesondere können besonders kurze Fasern oder sehr kleine Faserpartikel (Feinstoff) im Zuge von Koch-, Wasch- und Bleichprozessen über die Abwässer ausgeschwemmt werden. Neben dem schon erwähnten Stoffverlust kommt es dadurch auch zu einer erhöhten Belastung der Abwässer. Ferner kann sichergestellt werden, dass nicht zu viel Staub produziert wird und, dass die vorliegenden Fasern geeignete Entwässerungseigenschaften aufweisen (i.e. nicht zu große Oberflächen).

Die Einstellung einer spezifischen mittleren Faserlänge kann besonders vorteilhaft sein, um in Prozessen der späteren Weiterverwendung des aufbereiteten Ausgangsstoffes, zum Beispiel als Zellstoff beim Herstellen einer Spinnmasse (für ein Viskoseverfahen und/oder ein Lyocellverfahren), eine gute Zugänglichkeit und Benetzung der Fasern mit den Reaktionsmedien zu gewährleisten. Fasern mit der vorbestimmten Faserlängenverteilung können zudem in einer gegebenen Reaktionszeit (z.B. in einer Spinnmasse eines Lyocellverfahrens) vollständig gelöst werden, wodurch sich kein zusätzlicher Filtrationsaufwand für die Spinnmasse ergibt.

Im Weiteren werden zusätzliche Ausführungsbeispiele der Verfahren, des Formkörpers, und des Verwendens beschrieben.

Gemäß einem Ausführungsbeispiel weist der Cellulose-aufweisende Ausgangsstoff ganz oder teilweise Reste aus einer Kleidungsherstellung und/oder Altkleider auf. Dies kann den Vorteil bringen, dass Alttextilien auf sehr effiziente Weise recycelt werden können.

Die Alttextilien können jeweils Cellulose und optional Fremdstoffe wie synthetischen Kunststoff aufweisen, und damit als Cellulose-haltige Ausgangsstoffe verwendet werden. Somit können Alttextilien wiederverwendet werden als Ausgangsstoffe mit einer (bevorzugt) vordefinierten Zusammensetzung zum kontinuierlichen Herstellen eines (regenerierten) cellulosischen Formkörpers, insbesondere wobei die Cellulose des regenerierten Formkörpers im Wesentlichen in Form von Lyocellfasern, Viskosefasern und/oder Papierfasern vorliegt.

In einem weiteren Ausführungsbeispiel kann der Aufbereitung der stofflichen Zusammensetzung der verwendeten Alttextil Mischung eine Vorsortierung vorgeschaltet werden. Alttextilien können üblicherweise in einem schlecht definierbaren (inhomogenen) Mix angeliefert werden. Gebrauchte Textilien können mit einer mechanischen, auch manuellen, Vorsortierung zur Ausscheidung völlig unbrauchbarer Anteile von z.B. Wolle, Metallfolien, Kunststoffvliesen, usw. vorselektioniert werden.

Gemäß einem Ausführungsbeispiel können Reste aus einer Kleidungsherstellung mit Altkleidern gemischt werden, um die vordefinierte Zusammensetzung bereitzustellen. Reste aus einer Kleidungsherstellung können z.B. Produktionsabfälle aus der Industrie sein und sind damit oftmals identifizierbar und teilweise sortenrein. Durch das Zusammenführen dieser beiden (Recycling-) Ströme kann sich eine vorteilhafte Alttextil Mischung bereitstellen lassen. Diese kann für die Herstellung eines cellulosischen Formkörper, z.B. eines Lyocellformkörpers, besonders gut geeignet ist.

Gemäß einem weiteren Ausführungsbeispiel weist das Aufbereiten ferner auf: Vereinzeln des Cellulose-aufweisenden Ausgangsstoffes derart, dass einzelne Cellulose-Fasern (insbesondere im Wesentlichen ausschließlich einzelne Cellulose-Fasern) vorliegen. Dies kann den Vorteil haben, dass ein (komplettes) Desintegrieren des Ausgangsstoffes (z.B. Alttextilien zu Einzelfasern) ein besonders geeignetes Bereitstellen einer vorbestimmten Faserlängenverteilung ermöglicht.

Das Vereinzeln kann auf mechanische und/oder chemische Weise erreicht werden. Es kann ein einzelnes Verfahren verwendet werden oder eine Mehrzahl von Verfahren können in Kombination miteinander verwendet werden.

In einem Ausführungsbeispiel werden die Alttexilien derart zerkleinert, dass es auch zu einem Vereinzeln der Fasern kommt. Beispielsweise kann ein Refiner eingesetzt werden, um ein Vereinzeln der Fasern zu erreichen. Mit Refinern können hauptsächlich Hackschnitzel, aber auch Alttextilien, mechanisch zerfasert werden, wobei die Fasern auch mechanisch bearbeitet werden können.

Ein chemisches Vereinzeln kann z.B. mittels einer Kochung (z.B. alkalische Kochung) durchgeführt werden. Dieser Prozess kann auch mit einem Abtrennen von nicht-cellulosischen Fasern (z.B. synthetische Fasern) kombiniert werden. Ferner kann der Koch-Prozess auch mit einem Erzeugen von Cellulosefasern mit kurzer Faserlänge (durch entsprechende Einstellen der Prozessparameter) kombiniert werden.

Alternativ oder ergänzend können die Fasern in einem flüssigen Medium einem elektrischen Feld ausgesetzt werden. Dieses elektrische Feld kann zu einem Ausrichten der Fasern führen, wodurch das Vereinzeln der Fasern erleichtert oder erreicht werden kann. In einem weiteren Ausführungsbeispiel kann der Ausgangsstoff derart mechanisch bewegt, z.B. geschüttelt werden, dass die Fasern dadurch vereinzelt werden.

In einem Ausführungsbeispiel kann es notwendig sein, die Alttextilien (im Wesentlichen) komplett in Einzelfasern zu desintegrieren, wobei es dann keine Gewebestückchen mehr in dem Ausgangsstoff gibt.

Gemäß einem exemplarischen Ausführungsbeispiel kann das vollständige Desintegrieren von Gewebstücken notwendig sein, um i) Faserlängen vorteilhaft einzustellen, ii) verschiedene Fasertypen eines möglichen Mischgewebes, z.B. mittels mechanischer Verfahren, voneinander zu trennen, und iii) unlösliche Rückstande bei der Weiterverarbeitung (z.B. Spinnmasse) zu vermeiden.

Gemäß einem weiteren Ausführungsbeispiel weist das Aufbereiten ferner auf: Kürzen (insbesondere Schneiden) der Cellulose-Fasern (insbesondere der vereinzelten Cellulose-Fasern) derart, dass die vorbestimmte Faserlängenverteilung erhalten wird. Zusätzlich oder alternativ kann das Aufbereiten ferner aufweisen: selektives Abtrennen von Cellulose-Fasern (insbesondere von vereinzelten Cellulose-Fasern), welche der vorbestimmten Faserlängenverteilung im Wesentlichen nicht entsprechen (insbesondere zu kurz oder zu lang sind). Dies kann den Vorteil haben, dass die erwünschte Faserlängenverteilung mittels einem oder mehr steuerbaren Prozessschritt(en) genau eingestellt werden kann.

In einem bevorzugten Ausführungsbeispiel werden die Fasern zunächst vereinzelt, um ein besonders effizientes Einstellen der gewünschten Längenverteilung zu erreichen.

Gemäß einem Ausführungsbeispiel werden die Fasern zu einer bestimmten Länge mittels Schneidens gekürzt. Ähnlich dem Zerkleinern von Alttextilien können z.B. Guillotinen, Schneidmühlen, oder Schneidmesser eingesetzt werden. Das Schneiden wird so durchgeführt, dass eine bevorzugte Faserlängenverteilung in dem aufbereiteten Ausgangsstoff vorliegt.

Gemäß einem weiteren Ausführungsbeispiel können die Fasern mit Hilfe eines Refiners gekürzt werden. Im einfachsten Fall eines Einscheibenrefiners wird dabei eine Fasersuspension im sogenannten Mahlspalt zwischen einer festen, und einer rotierenden Scheibe gemahlen. Beide Scheiben sind dabei mit Messern, Schneidkanten oder ähnlich wirkenden Mahlkörpern besetzt, wodurch es zur Kürzung der Fasern kommt. Zusätzlich zum kürzenden Effekt kann mit Refinern auch der Fibrillationsgrad der Fasern eingestellt werden. Weitere Ausführungsformen eines Refiners sind z.B. Doppelscheibenrefiner (zwei gegenläufige Scheiben), Doppelspaltrefiner, Kegelrefiner und Zylinderrefiner. Das Einsetzen eines Refiners wird so durchgeführt, dass eine bevorzugte Faserlängenverteilung in dem aufbereiteten Ausgangsstoff vorliegt.

Gemäß einem weiteren Ausführungsbeispiel kann die gewünschte Faserlänge mit Hilfe eines sogenannten Holländers eingestellt werden. Ein Holländer ist ein Aggregat bestehend aus einem Trog, welcher als Rundlauf ausgebildet ist, und einer rotierenden Messerwalze. Durch die Bewegungen der Messerwalze einerseits und der Fasersuspension im Rundlauf andererseits können die Fasern mechanisch bearbeitet werden.

Gemäß einem Ausführungsbeispiel kann das Kürzen auch auf chemische Weise durchgeführt werden. Beispielsweise können die Prozessbedingungen während eines Koch-Prozesses so eingestellt werden, dass die Faserlänge der Cellulosefasern abnimmt. Somit können zu lange Fasern chemisch auf eine erwünschte Länge verkürzt werden.

Gemäß einem Ausführungsbeispiel kann das gezielte Einstellen der Faserlängenverteilung auch ein (selektives) Abtrennen von Fasern umfassen, welche nicht der vorbestimmten Faserlängenverteilung entsprechen. Zu kurze bzw. zu lange Fasern können auf diese Weise mittels eines Trennverfahrens (z.B. insbesondere mit Hilfe von Schlitzsortierern) von der Fasern mit der gewünschten Faserlänge abgetrennt werden. Somit können z.B. kürzere Cellulosefasern von längeren Cellulosefasern abgetrennt werden. Fasern, insbesondere zu lange Fasern, welche nicht der gewünschten Faserlängenverteilung entsprechen, können dann erneut dem Faserkürzungsprozess zugeführt werden.

Gemäß einem weiteren Ausführungsbeispiel weist der Cellulose-aufweisende Ausgangsstoff nicht-cellulosische Fremdstoffe (insbesondere synthetische Fasern) auf und das Aufbereiten weist ferner auf: i) mechanisches Abtrennen zumindest eines Teils der nicht-cellulosischen Fremdstoffe, und/oder ii) chemisches Abtrennen zumindest eines Teils der nicht-cellulosischen Fremdstoffe. Dies kann den Vorteil haben, dass ein gründliches Abreichern mit bekannten und etablierten Verfahren durchgeführt werden kann.

Gemäß einem Ausführungsbeispiel kann das Abtrennen der nicht-Faserbestandteile von den Faserbestandteilen aufgrund unterschiedlicher physikalischer Eigenschaften, insbesondere mittels Metallabscheidens und/oder gravitativen Abscheidens, erfolgen. Metallische Komponenten (zum Beispiel Reißverschlüsse, Nieten, etc.) können zum Beispiel aufgrund ihrer magnetischen Eigenschaften abgetrennt werden. Auch der Einfluss der Gravitationskraft auf unterschiedliche Bestandteile können zum Trennen eingesetzt werden.

Gemäß einem Ausführungsbeispiel kann das mechanische Abtrennen basierend auf Dichteunterschieden zwischen den nicht-cellulosischen Fasern und den cellulosischen Fasern erfolgen. Zum Beispiel können in einer Zentrifuge Materialien unterschiedlicher Dichte aufgrund unterschiedlich starker Zentrifugalkräfte separiert werden. Nach Überführen der Bestandteile in ein flüssiges Medium können sich diese aufgrund unterschiedlicher Dichten zum Teil auf der Oberfläche ansammeln, während andere Bestandteile schweben oder sich am Boden absetzen.

Gemäß einem Ausführungsbeispiel kann das mechanische Abtrennen basierend auf unterschiedlichen elektrostatischen Eigenschaften zwischen den nicht-cellulosischen Fasern und den cellulosischen Fasern erfolgen. Aufgrund unterschiedlicher elektrostatischer Eigenschaften können die unterschiedlichen Fasern auf ein angelegtes elektrisches Feld in unterschiedlicher Weise reagieren. Dieser wiederum erlaubt ein Auftrennen cellulosischer Fasern gegenüber nicht-cellulosischen Fasern.

Gemäß einem Ausführungsbeispiel kann das mechanische Abtrennen ein Suspendieren (d.h. ein Überführen in eine Suspension) der Faserbestandteile in einem flüssigen Medium, insbesondere einem wässrigen Medium, und ein Trennen der nicht-cellulosischen Fasern von den cellulosischen Fasern aufgrund unterschiedlicher physikalischer Eigenschaften in dem flüssigen Medium (insbesondere unterschiedlichen gravitativen, zentrifugalkraftbezogenen, flotativen und/oder elektrostatischen Eigenschaften) aufweisen. Wenn die unterschiedlichen Fasern in einem flüssigen Medium aufgrund ihrer unterschiedlichen Zusammensetzung unterschiedliches Verhalten zeigen, erlaubt auch dies ein Auftrennen der unterschiedlichen Faserbestandteile.

Gemäß einem Ausführungsbeispiel kann das flüssige Medium mindestens einen Zusatz zum Verstärken der unterschiedlichen physikalischen Eigenschaften aufweisen, insbesondere ein Dispergiermittel und/oder ein Quellungsmittel. Unter einem Dispergiermittel oder Dispergatoren können insbesondere Additive verstanden werden, die das Dispergieren, also eine Feinverteilung eines Stoffes (zum Beispiel einer Faser) in einem kontinuierlichen Medium (zum Beispiel in einer Flüssigkeit) ermöglichen oder stabilisieren. Unter einem Quellungsmittel können insbesondere Additive verstanden werden, die ein Quellen einer Substanz fördern. Unter Quellen kann ein Vorgang verstanden werden, bei dem ein Stoff (insbesondere eine Flüssigkeit) in einen Festkörper eindringt und eine Volumenvergrößerung des Letzteren bewirkt. Wenn dem Medium ein oder mehrere solche Additive zugesetzt werden, können die Diskrepanzen in den Eigenschaften der diversen Fasern, die das mechanische Auftrennen der unterschiedlichen Fasern bedingen, erhöht werden. Dies erhöht die Effizienz der Trennung.

Gemäß einem Ausführungsbeispiel kann das chemische Abtrennen ein selektives Lösen nur zumindest eines Teils der nicht-cellulosischen Fasern oder nur zumindest eines Teils der cellulosischen Fasern in einem Lösungsmittel, und ein Abtrennen, insbesondere Abfiltrieren, zumindest eines Teils der nicht gelösten Faserbestandteile aufweisen. Anders ausgedrückt können die verschiedenen Fasern einem (zum Beispiel flüssigen, insbesondere wässrigen) Medium zugeführt werden, in dem sich nur bestimmte dieser Fasern, insbesondere selektiv Polyesterfasern, ausgeprägt lösen, wohingegen andere Fasern, insbesondere Cellulosefasern, dort kein oder nur ein schwächeres Lösungsverhalten zeigen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem Ausführungsbeispiel kann das mechanische Abtrennen und/oder das chemische Abtrennen ein Abtrennen von synthetischen Fasern als nicht-cellulosische Fasern aufweisen. In den wiederverwerteten textilen Materialien, insbesondere Altkleider und/oder textile Abfallreste, finden sich häufig nicht-cellulosische Fasern synthetischen Ursprungs. Als Beispiel für solche synthetischen Fasern können Polyester, Polyamid und/oder Elastan genannt werden. Diese können mit den hier beschriebenen Verfahren wirksam von Cellulosefasern getrennt werden.

Gemäß einem Ausführungsbeispiel kann das chemische Abtrennen ein Zuführen einer alkalischen Lösung, insbesondere unter Verwendung oxidierender Agenzien, aufweisen, insbesondere eine alkalische Kochung. Insbesondere kann das Zuführen der alkalischen Lösung zum Abbauen nicht-cellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können.

Gemäß einem weiteren Ausführungsbeispiel werden die nicht-cellulosischen Fremdstoffe, insbesondere synthetische Fasern, zumindest teilweise in dem Ausgangsstoff behalten. Dies kann den Vorteil haben, dass bestimmte vorteilhafte Eigenschaften (z.B. Stabilität, Dehnbarkeit, Elastizität, Haltbarkeit) in dem erhaltenen Ausgangsstoff bzw. dem herzustellenden Formkörper bereitgestellt werden können. In einem Ausführungsbeispiel können synthetische Fasern (z.B. Polyester, aber auch Polyurethan, insbesondere Elastan, oder Polyamid) zumindest teilweise in dem Ausgangsstoff behalten werden und ebenfalls derart aufbereitet werden, dass sie eine weitere vorbestimmte Faserlängenverteilung aufweisen. Die weitere vorbestimmte Faserlängenverteilung kann der vorbestimmten Faserlängenverteilung entsprechen oder von dieser verschieden sein.

Gemäß einem weiteren Ausführungsbeispiel weist das Aufbereiten ferner auf: Durchführen eines Koch-Prozesses (insbesondere unter Verwenden einer alkalischen Kochlösung). Insbesondere wird der Koch-Prozess derart durchgeführt, dass die Cellulosefasern vereinzelt werden und/oder, dass die Cellulosefasern des aufbereiteten Cellulose-aufweisenden Ausgangsstoffes im Wesentlichen die vorbestimmte Faserlängenverteilung aufweisen. Dies kann den Vorteil bereitstellen, dass robuste und erprobte Techniken direkt angewendet werden können.

Wenn als fester Ausgangsstoff Holzschnitzel verwendet werden, so kann eine Kochung nach dem Sulfit- und/oder (Vorhydrolyse-) Kraft Prozess oder Natriumhydroxid das Lösen von Lignin ermöglichen, um dieses von der Cellulose zu trennen. Werden als fester Ausgangsstoff Alttextilien verwendet, so kann auf diese Weise synthetischer Kunststoff gelöst werden, um die Cellulose in möglichst reiner Form bzw. mit einer erwünschten Restkonzentration an Polymeren, zu erhalten. Insbesondere kann ein Koch-Prozess, insbesondere mit NaOH, zur Verseifung von Kunststoffen wie Polyester, Polyamid oder Polyurethan führen.

Gemäß einem bevorzugten Ausführungsbeispiel kann die alkalische Kochung folgendermaßen durchgeführt werden: die Fasern, insbesondere bereits angereicherte cellulosische (oder vorwiegend cellulosischen) Fasern, können mit einer alkalischen Lösung (zum Beispiel Natriumhydroxid oder Kaliumhydroxid) in Kombination mit einem gasförmigen Oxidationsmittel (zum Beispiel O₂) in einem Kocher (z.B. einem Druckkessel) behandelt werden (vorzugsweise bei einem pH-Wert von mindestens 9), und zwar:
a) bei einer Temperatur zwischen 90° C und 185° C;
b) für eine Inkubationszeit von 45 Minuten bis 270 Minuten;
c) in der Anwesenheit eines cellulosestabilisierenden Additivs (zum Beispiel ein Magnesiumsalz, vorzugsweise Magnesiumsulfat; oder eine chelatbildende Verbindung auf Basis eines Übergangsmetalls, zum Beispiel Ethylendiamintetraessigsäure (EDTA)), vorzugsweise in einer Konzentration in einem Bereich zwischen 0,01 Gewichtsprozent und 5 Gewichtsprozent bezogen auf die zugeführten Fasern;
d) bei einer Alkali-Konzentration in einem Bereich zwischen 1 Gewichtsprozent und 35 Gewichtsprozent bezogen auf die zugeführten Fasern;
e) bei einem initialen Gasdruck in einem Bereich von 1 bar bis 21 bar (entsprechend ungefähr 0,1 MPa bis ungefähr 2,1 MPa).

Der erzeugte gelöste Zellstoff kann danach z.B. einer Waschprozedur unterzogen werden.

Insbesondere kann das Zuführen der alkalischen Lösung zum Abbauen nicht-cellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können. In dieser Prozedur kann zum Beispiel Polyester in die Monomere Ethylenglykol und Terephthalsäure gespalten werden. Diese sind wasserlöslich und können gemäß einem Ausführungsbeispiel über Prozessablaugen von den Cellulosefasern abgetrennt werden. Parallel zum Polyesterabbau können in diesem Kochprozess auch Celluloseabbaureaktionen ablaufen.

Durch geeignete Wahl der Prozessparameter kann der Celluloseabbau gemäß einem Ausführungsbeispiel der Erfindung so gesteuert werden, dass ein gewisser Zielpolymerisationsgrad eingestellt wird. Dies kann vorteilhaft sein, um die Faserlänge und damit die Faserlängenverteilung in einem Cellulose-aufweisenden Ausgangsstoff zu steuern. Beispielsweise können besonders kurze Fasern gezielt noch kürzer gemacht werden, um diese effizienter abtrennen zu können. Weiterhin können zu lange Fasern auf diese Weise chemisch zu einer bevorzugten Länge verkürzt werden.

Im Folgenden werden einige Ausführungsbeispiele der vorbestimmten Faserlängenverteilung beschrieben. Diese können die oben ausgeführten Vorteile für den aufbereiteten Ausgangsstoff und auch für den herzustellenden Formkörper bereitstellen.

Übersicht über besonders vorteilhafte vorbestimmte Faserlängenverteilungen (alle Werte in mm und längengewichtet):

| | Basis | Bevorzugt | Besonders bevorzugt |
|---|---|---|---|
| Mittl. Faserlänge in mm | 0,75 - 2,5 | 0,9 - 1,75 | 1,0 - 1,5 |
| Anteil <0,2 mm | <11 % | <8 % | <5 % |
| Anteil >2 und <3,5 mm | <17,5 % | <12,5 % | <10 % |
| Anteil >3,5 mm | <12,5 % | <9 % | <6 % |

Gemäß einem weiteren Ausführungsbeispiel weist die vorbestimmte Faserlängenverteilung eine mittlere längengewichtete Faserlänge in dem Bereich 0,75 bis 2,5 mm, insbesondere 0,9 bis 1,75 mm, weiter insbesondere 1,0 bis 1,5 mm, auf.

Gemäß einem weiteren Ausführungsbeispiel weist die vorbestimmte Faserlängenverteilung einen Anteil von 11% oder weniger, insbesondere 8% oder weniger, weiter insbesondere 5% oder weniger, von Fasern mit einer Länge von weniger als 0,2 mm auf.

Gemäß einem weiteren Ausführungsbeispiel weist die vorbestimmte Faserlängenverteilung einen Anteil von 17,5% oder weniger, insbesondere 12,5% oder weniger, weiter insbesondere 10% oder weniger, von Fasern mit einer Länge in dem Bereich 2 bis 3,5 mm auf.

Gemäß einem weiteren Ausführungsbeispiel weist die vorbestimmte Faserlängenverteilung einen Anteil von 12,5% oder weniger, insbesondere 9% oder weniger, weiter insbesondere 6% oder weniger, von Fasern mit einer Länge von mehr als 3,5 mm auf.

Gemäß einem weiteren Ausführungsbeispiel weist das Verfahren ferner auf: Durchführen eines Nachfolge-Prozesses, insbesondere eines Bleich-Prozesses, nach dem Aufbereiten. Dies hat den Vorteil, dass auf flexible Weise weitere Aufbereitungsprozesse dem Aufbereiten nachgeschaltet werden können.

Nachfolge-Prozesse können beispielsweise bestimmte Reinigungsschritte oder ein Trocknen von Zellstoff-Masse (Pulpe) umfassen. Ferner kann ein Nachfolgeprozess ein Bleichen umfassen. Letzteres insbesondere dann, wenn zum Herstellen eines cellulosischen Formkörpers aus dem aufbereiteten Ausgangsstoff ein Papierstoff vorgesehen ist. Als Bleichen kann ein Prozess bezeichnet werden, welcher unerwünschte Färbungen entfernt oder abschwächt. Beim Bleichen kommen Bleichmittel zum Einsatz, bei welchen es sich um oxidierende oder reduzierende Verbindungen handelt, welche zumindest teilweise selektiv sein sollten. Beispielsweise können Bleichmittel farbgebende Substanzen angreifen, indem sie die Chromophore zerstören. Als Bleichmittel können z.B. Sauerstoff, Ozon, Wasserstoffperoxid, Chlor-Verbindungen (z.B. Chlordioxid oder Hypochlorit), aber auch Enzyme verwendet werden.

Das Bleichen kann zumindest eines aus einer Gruppe aufweisen, die besteht aus einem oxidativen Bleichen, einem reduktiven Bleichen und einem enzymatischen Bleichen. Gemäß einem bevorzugten Ausführungsbeispiel der Erfindung kann das Bleichen ein Durchführen einer sauren Wäsche, gefolgt vom Durchführen einer Ozonbleiche, wiederum gefolgt vom Durchführen einer Peroxidbleiche aufweisen. Durch das Bleichen können Farbstoffe und andere chemische Reststoffe in den wiederverwerteten Textilmaterialien entfernt werden.

Gemäß einem weiteren Ausführungsbeispiel weist das Bilden des cellulosischen Formkörpers aus dem aufbereiteten Ausgangsstoff eines auf aus der Gruppe welche besteht aus: einem Lyocellverfahren, einem Viskoseverfahren, einem Papierherstellungsverfahren. Dies kann den Vorteil bringen, dass besonders effiziente und erprobte Verfahren direkt auf den aufbereiteten Ausgangsstoff angewendet werden können, um einen (regenerierten) cellulosischen Formkörper herzustellen.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Bereitstellen eines aufbereiteten Cellulose-aufweisenden Ausgangsstoffes gemäß einem exemplarischen Ausführungsbeispiel der Erfindung.
Figur 2 zeigt ein Flussdiagramm eines Verfahrens zum Herstellen eines regenerierten cellulosischen Formkörpers aus dem aufbereiteten Ausgangsstoff gemäß einem exemplarischen Ausführungsbeispiel der Erfindung.
Figur 3 zeigt eine Apparatur zum Bereitstellen des aufbereiteten Ausgangsstoffes und zum Herstellen eines regenerierten cellulosischen Formkörpers mittels eines Lyocell-Verfahrens aus dem aufbereiteten Ausgangsstoff gemäß einem exemplarischen Ausführungsbeispiel der Erfindung.
Figur 4 zeigt eine mittels eines Lyocell-Verfahrens hergestellte Cellulosefaser.
Figur 5 zeigt eine mittels eines Viskose-Verfahrens hergestellte Cellulosefaser.
Figur 6 zeigt eine natürliche Cellulosefaser aus einer Baumwollpflanze.

Gleiche oder ähnliche Komponenten in unterschiedlichen Figuren sind mit gleichen Bezugsziffern versehen.

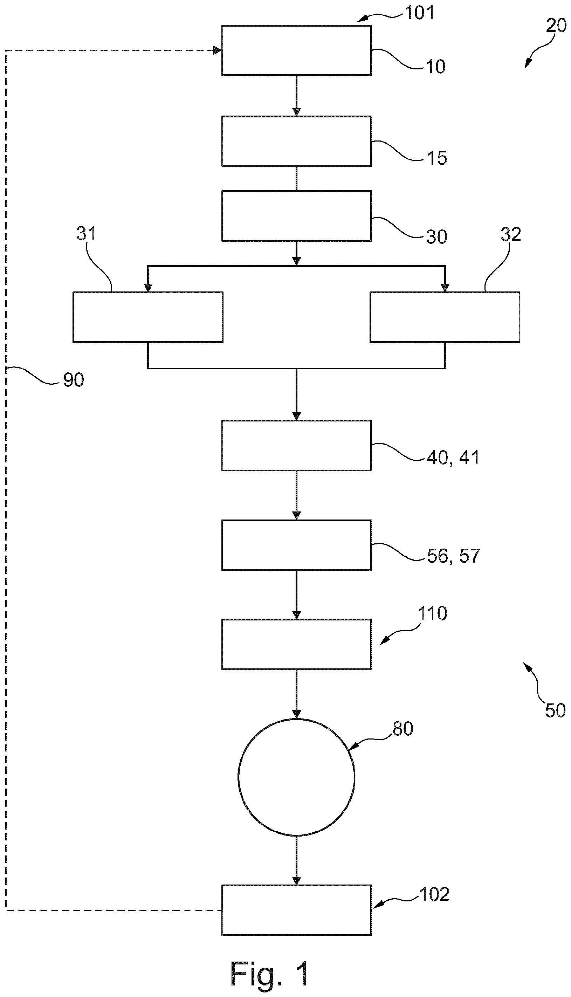

**Figur 1** zeigt ein Flussdiagramm eines Verfahrens zum Bereitstellen (siehe Bezugszeichen 50) eines aufbereiteten Cellulose-aufweisenden Ausgangsstoffes 110 gemäß einem exemplarischen Ausführungsbeispiel der Erfindung. Zunächst wird ein Cellulose-haltiger Ausgangsstoff 101 bereitgestellt bei welchem es sich um einen Mix aus Alttextilien (Altkleider und/oder Reste einer Kleidungsherstellung) handelt. Dieser kann aus verschiedenen Quellen (Pre-/Post-Consumer) angeliefert werden und teilweise sehr inhomogen sein. Die Alttextilien als Ausgangsstoff 101 können neben Cellulose auch synthetische Fasern (z.B. Polyester) aufweisen.

Der Alttextilmix kann vorsortiert werden, um eine bevorzugte Zusammensetzung bereitzustellen. Besonders gut geeignet sind zum Beispiel (Verschnitt) Reste aus der Kleidungsproduktion, welche eine im Wesentlichen bekannte Zusammensetzung aufweisen. Weiterhin können Alttextilien mit bekannter Zusammensetzung, z.B. sehr hohem Baumwollgehalt, zugegeben werden, um den Cellulosegehalt zu erhöhen. Ferner können auch Zusammensetzungskomponenten mit zumindest teilweise bekannter Zusammensetzung dem Ausgangsstoff 101 entzogen werden. Beispielswiese kann gezielt Sportbekleidung entfernt werden, welche einen besonders hohen Anteil an Polyester aufweist. Weiterhin kann ein mechanisches Trennen, z.B. eine Dichtetrennung, insbesondere mittels eines Flotationsverfahrens, durchgeführt werden, um z.B. Polyester und/oder Polypropylen selektiv von Cellulose abzureichern. Hierbei können Faserbestandteile in einem flüssigen (wässrigen) Medium suspendiert werden. Trennen der nicht-cellulosischen Fasern von den cellulosischen Fasern gelingt aufgrund unterschiedlicher physikalischer Eigenschaften in dem flüssigen Medium, insbesondere unterschiedlichen gravitativen, zentrifugalkraftbezogenen, flotativen und/oder elektrostatischen Eigenschaften.

In einem ersten Schritt des Zuführens wird zunächst ein mechanisches Zerkleinern (siehe Block 10) der Alttextilien 101 durch Schreddern erfolgen. Dadurch können vor allem große nicht-cellulosische Störstoffe aus dem Ausgangsstoff 101 entfernt werden, beispielsweise Knöpfe, Nähte und Drucke der Altkleider, die zum Erzeugen des Ausgangsstoffs 101 zumindest teilweise verwendet worden sind.

Zunächst wird das Textilmaterial in einer oder mehreren Guillotinen und/oder Schneidmühlen durch Schreddern, bevorzugt unter Einsatz von Schneidmessern, zerkleinert. Dadurch werden zerkleinerte Textilstücke zum Beispiel im Größenbereich zwischen 0,5×0,5 cm² und 10×10cm² erhalten.

Nach dem Zerkleinern 10 folgt ein Aufbereiten, welches mit dem Bezugszeichen 20 bezeichnet ist und eine Mehrzahl von Schritten aufweisen kann. Insbesondere wird das Aufbereiten 20 des Cellulose-aufweisenden Ausgangsstoffs 101 derart durchgeführt, dass die Cellulose-Fasern des aufbereiteten Cellulose-aufweisenden Ausgangsstoffes 110 eine vorbestimmte Faserlängenverteilung aufweisen.

Das mechanische Zerkleinern 10 kann auch zumindest teilweise dem Aufbereiten 20 zugeordnet sein, wenn dadurch Gewebestücke des Ausgangsstoffes 101 so sehr zerkleinert werden, dass auch ein Vereinzeln in Einzelfasern stattfindet. Durch das mechanische Zerkleinern 10 kann so zum Beispiel der Ausgangsstoff 101 zumindest teilweise in Einzelfasern zertrennt/vereinzelt werden. Hierfür kann ein Refiner eingesetzt werden.

Der mechanisch zerkleinerte Ausgangsstoff 101 wird dann einem chemischen Aufbereitungsprozess zugeführt, bei welchem es sich um eine alkalische Kochung 15 handelt. Der Koch-Prozess 15 kann mehrere Aufgaben erfüllen. Zunächst können die Cellulosefasern aufbereitet werden, indem zusätzliche Materialien wie synthetische Fasern (z.B. Polyester) durch die Kochung 15 abgebaut werden. Weiterhin unterstützt der Koch-Prozess 15 ein Vereinzeln der Cellulosefasern. Abhängig von den verwendeten Prozessbedingungen kann der Koch-Prozess 15 so durchgeführt werden, dass die Faserlängenverteilung beeinflusst wird. So können beispielsweise zu kurze Fasern noch weiter verkürzt werden, um diese besser abtrennen zu können oder zu lange Fasern können auf eine gewünschte Länge verkürzt werden.

Nach dem Zerkleinern 10 wird ein Schritt des Vereinzelns 30 an den zerkleinerten Alttextilien durchgeführt. Dies kann zumindest teilweise mittels des beschriebenen mechanischen Zerkleinerns 10 geschehen. Ferner können weitere Vereinzelungsschritte zum Einsatz kommen. Eine chemische Vereinzelung 30 kann z.B. (zumindest teilweise) mittels der oben beschriebenen alkalischen Kochung 15 durchgeführt werden. Ferner oder ergänzend kann das Vereinzeln 30 auch mechanische Schritte umfassen wie Schütteln oder Kämmen. Zusätzlich kann ein elektrisches Feld angelegt werden, um die Fasern auszurichten (Gleichspannungsfeld in flüssigem Medium) oder der Einsatz von UV-Strahlung kann das Vereinzeln 30 fördern.

Im Falle, dass die Alttextilien des Ausgangsstoffes 101 nicht nur Cellulosefasern, sondern auch synthetische Fasern enthalten, werden Trennschritte 31, 32 durchgeführt. In dem ausgeführten Beispiel werden diese Trennschritte 31, 32 nach dem Vereinzeln 30 und vor dem Kürzen 40 der Fasern durchgeführt. Jedoch können die Trennschritte 31, 32 auch z.B. vor dem Zerkleinern bzw. vor dem Vereinzeln durchgeführt werden. Durch mechanisches Abtrennen 32 werden synthetische Fasern wie Kunststoff auf mechanische Weise, z.B. durch Dichtetrennung, von den Cellulosefasern abgetrennt. Durch chemisches Abtrennen 31 werden synthetische Fasern wie Polyester auf chemische Weise, z.B. mittels einer alkalischen Kochung, von den Cellulosefasern abgetrennt. Hierbei kann es sich um dieselbe Kochung 15 handeln, welche eingesetzt wird, um Fasern zu vereinzeln oder um Fasern mit besonders kurzer Länge abzutrennen.

Nach dem Vereinzeln der Fasern, wonach der Cellulose-aufweisende Ausgangsstoff 101 im Wesentlichen als Einzelfasern vorliegt, kann ein gezieltes Einstellen der Faserlängenverteilung (siehe Block 40) der vereinzelten Cellulose-Fasern durchgeführt werden. Hierfür werden die Fasern zu einer bestimmten Länge mittels Schneidens gekürzt. Ähnlich dem Zerkleinern 10 werden Guillotinen und/oder Schneidmühlen eingesetzt. Das Schneiden wird so durchgeführt, dass eine bevorzugte Faserlängenverteilung in dem aufbereiteten Ausgangsstoff 110 vorliegt. Das gezielte Einstellen der Faserlängenverteilung umfasst weiterhin ein selektives Abtrennen 41 von Fasern, welche nicht der vorbestimmten Faserlängenverteilung entsprechen. Zu kurze bzw. zu lange Fasern können auf diese Weise mittels Dichtetrennung (z.B. Zentrifuge oder Flotation in einer Suspension) von der Fasern mit der gewünschten Faserlänge abgetrennt werden.

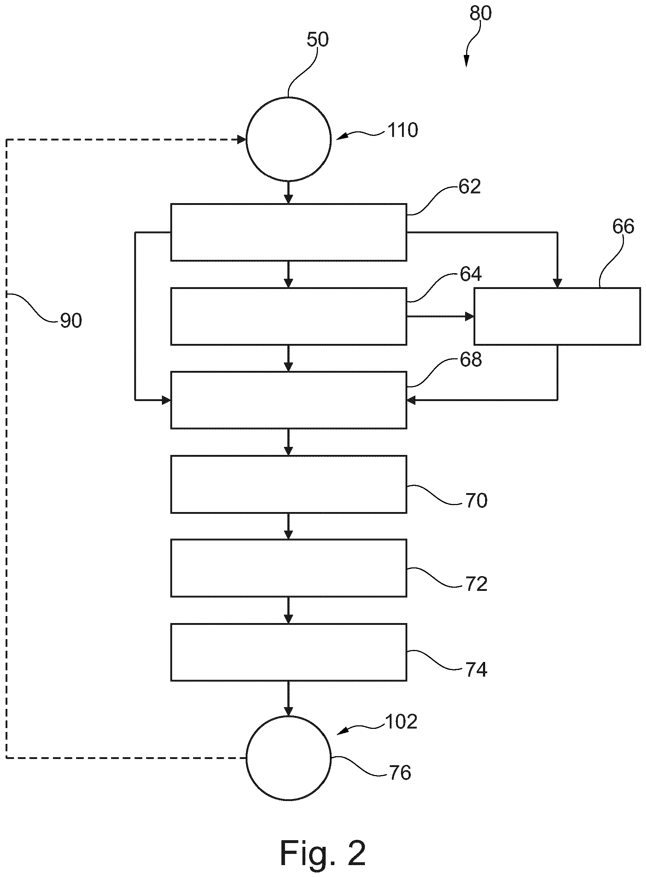

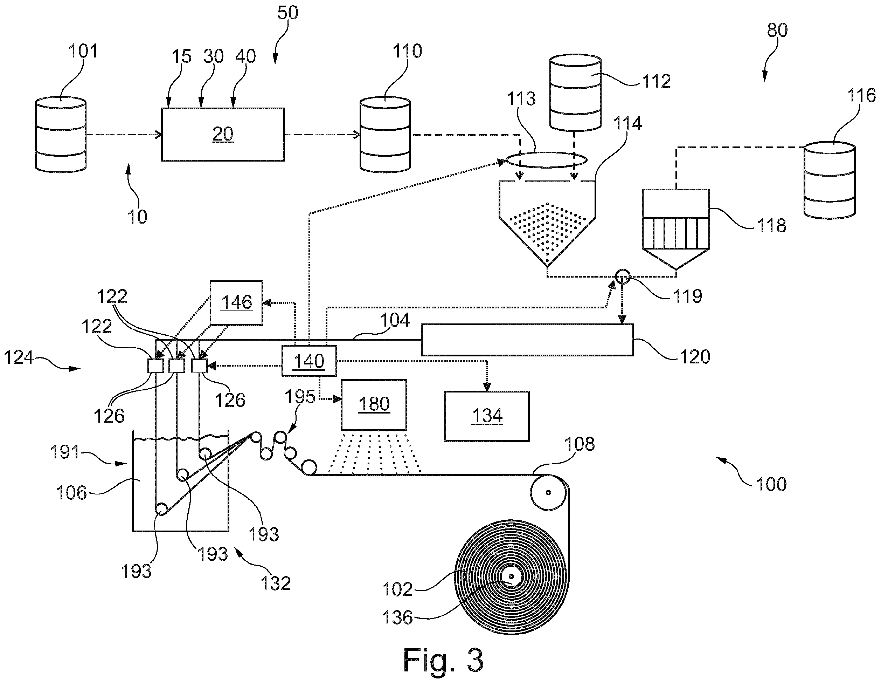

Der Ausgangsstoff 101 kann noch weitere Aufbereitungsschritte durchlaufen. Diese umfassen z.B. einen Reinigungsschritt (siehe 56) und einen Bleich-Prozess (siehe 57). Danach kann der aufbereitete Cellulose-aufweisende Ausgangsstoff 110 bereitgestellt werden. Der entsprechend aufgereinigte Cellulose-aufweisende Ausgangsstoff 110 wird danach, wie in Block 80 dargestellt, einem Verfahren zum Herstellen eines cellulosischen Formkörpers 102 zugeführt. Ein Beispiel für ein solches Verfahren ist ein Lyocellverfahren, welches bezüglich der Figuren 2 und 3 (siehe unten) detailliert beschrieben wird. Der erhaltene Formkörper 102 (z.B. als Faser in einem Lyocelltextil) kann nach Verwendung erneut recycelt werden (mit Bezugszeichen 90 dargestellt) und erneut dem Cellulose-haltigen Ausgangsstoff 101 beigefügt werden.

**Figur 2** zeigt ein Flussdiagramm 80 eines Verfahrens zum Herstellen eines regenerierten cellulosischen Formkörpers 102 (vergleiche Figur 3) aus dem aufbereiteten Ausgangsstoff 110 gemäß einem exemplarischen Ausführungsbeispiel der Erfindung.

Der Ausgangsstoff 110 wird mittels eines Aufbereitungsprozesses bereitgestellt (siehe Block 50, vergleiche Figur 1). Wie mit Block 50 dargestellt, kann ein so hergestellter aufbereiteter Ausgangsstoff 110 für ein nachfolgendes Lyocell- oder Viskoseverfahren verwendet werden, wobei ersteres im Folgenden näher beschrieben wird.

Im Weiteren wird beschrieben, wie auf Basis des Cellulose-aufweisenden Ausgangsstoffs 110 regenerierte Formkörper 102 aus Cellulose gemäß einem Ausführungsbeispiel der Erfindung hergestellt werden können. Hierfür wird der Ausgangsstoff 110 einer Apparatur (100, siehe Figur 3) zum Durchführen eines Lyocell-Verfahrens zugeführt. Zunächst erfolgt ein optionales Vorbereiten (Schritt 62) des aufbereiteten Ausgangsstoffs 110, z.B. ein Reinigen oder ein Zerkleinern.

Es ist auch möglich (siehe Block 64), den Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem weiteren Ausgangsstoff vermischt werden, welcher Cellulose und zumindest einen synthetischen Kunststoff aufweist, siehe Block 64. Dieser zugeführte weitere Ausgangsstoff weist einen Anteil an synthetischen Kunststoffen auf, welcher von dem Anteil an synthetischem Kunststoff in dem Ausgangsstoff 110 verschieden ist. Das Erzeugen des regenerierten cellulosischen Formkörpers kann nun basierend auf dem Ausgangsstoff 110 und dem weiteren Ausgangsstoff ausgeführt werden, so dass der regenerierte cellulosische Formkörper 102 einen vorbestimmten Anteil an synthetischem Kunststoff enthält. Der weitere Ausgangsstoff kann alternativ oder ergänzend zum Beispiel auch Reste aus einer Kleidungsherstellung aufweisen.

Unmittelbar nach dem Vorbereiten 62 bzw. unmittelbar nach dem Mischen 64 kann ein direktes Lösen 68 des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden.

Alternativ kann das Verfahren nach dem Vorbereiten 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich. Mittels des Reinigens 66 kann optional zumindest ein Teil von synthetischem Kunststoff entfernt werden, falls dies gewünscht ist. Beispielsweise kann auf diese Weise der Anteil von synthetischem Kunststoff in dem herzustellenden Formkörper 102 eingestellt bzw. beeinflusst werden.

Nach dem Lösen 68 des Ausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil können nach Nutzung des Formkörpers 102 dessen Cellulose und optionale synthetische Kunststoffe von neuem wiedergewonnen werden, indem ein weiteres Verfahren entsprechend der Verfahrensschritte zwischen Bezugszeichen 50 und 74 durchgeführt wird (siehe Block 90). Alternativ können die Cellulose und optionaler weiterer synthetischer Kunststoff des Formkörpers 102 in einem anderen Verfahren, beispielsweise einem Viskoseverfahren, wiedergewonnen werden.

**Figur 3** zeigt eine Apparatur 100 zum Bereitstellen eines aufbereiteten, Cellulose-aufweisenden, Ausgangsstoffs 110 und zum Herstellen eines regenerierten cellulosischen Formkörpers 102 mittels eines Lyocell-Verfahrens auf Basis des Ausgangsstoffs 110 gemäß einem exemplarischen Ausführungsbeispiel der Erfindung, das bezugnehmend auf die Figuren 1 und 2 beschrieben wurde.

Figur 3 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 3 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 3 entnommen werden kann, kann einem Speichertank 114 über eine Dosiereinrichtung 113 ein aufbereiteter Cellulose-aufweisender Ausgangsstoff 110 dem Lyocellverfahren 80 zugeführt werden. Der Ausgangsstoff 110 ist ein aufbereiteter Ausgangsstoff 110, welcher in einem Aufbereitungsverfahren 50, wie für Figur 1 oben beschrieben, gewonnen wurde.

Hierfür wird ein Cellulose-aufweisender Ausgangsstoff 101, nämlich Alttextilien, einem Aufbereitungsprozess zugeführt (siehe 10). Das Aufbereiten (siehe Block 20) umfasst mehrere Schritte, welche umfassen: i) einen Koch-Prozess 115, ii) ein Vereinzeln 30 der Cellulosefasern des Ausgangsstoffes 101 derart, dass im Wesentlichen einzelne Fasern vorliegen (das Vereinzeln 30 kann auch mit dem Koch-Prozess 115 kombiniert sein), iii) Kürzen (Schneiden) 40 der vereinzelten Fasern derart, dass eine vorbestimmte Faserlängenverteilung erreicht wird, und iv) selektives Abtrennen von Cellulosefasern, welche nicht der vorbestimmten Faserlängenverteilung entsprechen und/oder Abtrennen von nicht-Cellulosischen Fasern, z.B. synthetischen Fasern. Nach dem Durchführen des Aufbereitungsprozesses 20 ist ein aufbereiteter Cellulose-aufweisender Ausgangsstoff 110 bereitgestellt (siehe Bezugszeichen 50). Dieser aufbereitete Cellulose-aufweisende Ausgangsstoff 110 liegt z.B. als Zellstoff vor, welcher aus vereinzelten Cellulosefasern besteht. Diese Fasern weisen wiederum die vorbestimmte Faserlängenverteilung auf.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 3 gezeigter optionaler Wasserbehälter 112 kann dann weggelassen werden.

Gemäß einem alternativen Ausführungsbeispiel kann der Cellulose-aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, so dass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 3 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 3 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 3 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

Durch die vorbestimmte Faserlängenverteilung weist der aufbereitete Cellulose-aufweisende Ausgangsstoff 110 beim Herstellen der Spinnmasse eine gute Zugänglichkeit und Benetzung der Fasern mit den Reaktionsmedien auf. Weiterhin werden durch die vorbestimmte, vorteilhafte Faserlängenverteilung unlösliche Rückstande bei der Weiterverarbeitung der Spinnmasse vermieden.

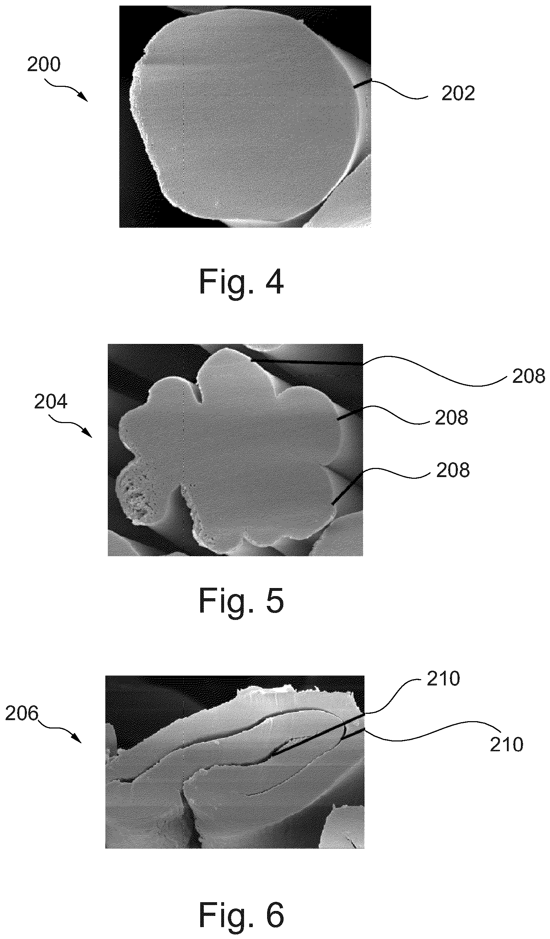

**Figur 4** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 5) und von Cellulosefasern aus Baumwollpflanzen (siehe Bezugszeichen 206 in Figur 6) unterschieden werden.

**Figur 5** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 6** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 4 bis Figur 6 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Im Folgenden werden einige Aspekte der Erfindung beschrieben:
1. Ein Verfahren zum Bereitstellen eines aufbereiteten Cellulose-aufweisenden Ausgangsstoffes (110), insbesondere eines Ausgangsstoffes zum Bilden eines, insbesondere regenerierten, cellulosischen Formkörpers (102), wobei das Verfahren aufweist:
   Zuführen eines Cellulose-aufweisenden Ausgangsstoffes (101), welcher cellulosische Fasern aufweist;
   Aufbereiten (20) des Cellulose-aufweisenden Ausgangsstoffs (101), um den aufbereiteten Cellulose-aufweisenden Ausgangsstoff (110) zu erhalten, derart, dass die Cellulose-Fasern des aufbereiteten Cellulose-aufweisenden Ausgangsstoffes (110) eine vorbestimmte Faserlängenverteilung aufweisen.
2. Das Verfahren gemäß Aspekt 1,
   wobei der Cellulose-aufweisende Ausgangsstoff (101) ganz oder teilweise Reste aus einer Kleidungsherstellung und/oder Altkleider aufweist.
3. Das Verfahren gemäß Aspekt 1 oder 2,
   wobei die vorbestimmte Faserlängenverteilung eine mittlere längengewichtete Faserlänge in dem Bereich 0,75 bis 2,5 mm, insbesondere 0,9 bis 1,75 mm, weiter insbesondere 1,0 bis 1,5 mm, aufweist.
4. Das Verfahren gemäß einem beliebigen der vorhergehenden Aspekte, wobei das Aufbereiten (20) ferner aufweist:
   Vereinzeln (30) des Cellulose-aufweisenden Ausgangsstoffes (101) derart, dass einzelne Cellulose-Fasern, insbesondere im Wesentlichen ausschließlich einzelne Cellulose-Fasern, vorliegen.
5. Das Verfahren gemäß einem beliebigen der vorhergehenden Aspekte, wobei das Aufbereiten (20) ferner aufweist:
   Kürzen (40), insbesondere Schneiden, der Cellulose-Fasern, insbesondere der vereinzelten Cellulose-Fasern, derart, dass die vorbestimmte Faserlängenverteilung erhalten wird; und/oder
   selektives Abtrennen (41), insbesondere mechanisches Abtrennen und/oder chemisches Abtrennen, von Cellulose-Fasern, insbesondere vereinzelten Cellulose-Fasern, welche nicht der vorbestimmten Faserlängenverteilung entsprechen.
6. Das Verfahren gemäß einem beliebigen der vorhergehenden Aspekte, wobei der Cellulose-aufweisende Ausgangsstoff (101) nicht-cellulosische Fremdstoffe, insbesondere synthetische Fasern, aufweist, und wobei das Aufbereiten (20) ferner aufweist:
   mechanisches Abtrennen (52) zumindest eines Teils der nicht-cellulosischen Fremdstoffe; und/oder
   chemisches Abtrennen (51) zumindest eines Teils der nicht-cellulosischen Fremdstoffe.
7. Das Verfahren gemäß einem beliebigen der vorhergehenden Aspekte, wobei das Aufbereiten (20) ferner aufweist:
   Durchführen eines Koch-Prozesses (15), insbesondere unter Verwenden einer alkalischen Kochlösung,
   weiter insbesondere wobei der Koch-Prozess (15) derart durchgeführt wird, dass die Cellulosefasern zumindest teilweise vereinzelt werden und/oder die Cellulosefasern des aufbereiteten Cellulose-aufweisenden Ausgangsstoffes (110) im Wesentlichen die vorbestimmte Faserlängenverteilung aufweisen.
8. Das Verfahren gemäß einem beliebigen der vorhergehenden Aspekte, wobei die vorbestimmte Faserlängenverteilung einen Anteil von 11% oder weniger, insbesondere 8% oder weniger, weiter insbesondere 5% oder weniger, von Fasern mit einer Länge von weniger als 0,2 mm aufweist.
9. Das Verfahren gemäß einem beliebigen der vorhergehenden Aspekte, wobei die vorbestimmte Faserlängenverteilung einen Anteil von 17,5% oder weniger, insbesondere 12,5% oder weniger, weiter insbesondere 10% oder weniger, von Fasern mit einer Länge in dem Bereich 2 bis 3,5 mm aufweist.
10. Das Verfahren gemäß einem beliebigen der vorhergehenden Aspekte, wobei die vorbestimmte Faserlängenverteilung einen Anteil von 12,5% oder weniger, insbesondere 9% oder weniger, weiter insbesondere 6% oder weniger, von Fasern mit einer Länge von mehr als 3,5 mm aufweist.
11. Ein Verfahren zum Herstellen eines, insbesondere regenerierten, cellulosischen Formkörpers (102), das Verfahren aufweisend:
   Bereitstellen (50) eines aufbereiteten Cellulose-aufweisenden Ausgangsstoffs (110) gemäß einem beliebigen der vorhergehenden Aspekte; und
   Bilden (80) des cellulosischen Formkörpers (102) aus dem aufbereiteten Cellulose-aufweisenden Ausgangsstoff (110).
12. Das Verfahren gemäß Aspekt 11,
   wobei das Bilden (80) des, insbesondere regenerierten, cellulosischen Formkörpers (102) aus dem aufbereiteten Cellulose-aufweisenden Ausgangsstoff (110) eines aufweist aus der Gruppe welche besteht aus: einem Lyocellverfahren, einem Viskoseverfahren, insbesondere einem Carbamatverfahren oder einem Kaltalkaliverfahren, einem Papierherstellungsverfahren.
13. Das Verfahren gemäß Aspekt 11 oder 12,
   wobei der, insbesondere regenerierte, cellulosische Formkörper (102) ausgewählt ist aus der Gruppe, welche besteht aus: einem Filament, einer Faser, einer Folie, einem Schwamm, einer Mikrokugel, einem Bead, oder einem Papierstoff.
14. Ein aufbereiteter Cellulose-aufweisender Ausgangsstoff (110) zum Herstellen eines cellulosischen Formkörpers (102), wobei der Cellulose-aufweisende aufbereitete Ausgangsstoff (110) eine mittlere längengewichtete Faserlänge in dem Bereich 0,75 bis 2,5 mm, insbesondere 0,9 bis 1,75 mm, weiter insbesondere 1,0 bis 1,5 mm, aufweist.
15. Verwenden von aufbereiteten Alttextilien mit einer mittleren längengewichteten Faserlänge in dem Bereich 0,75 bis 2,5 mm, insbesondere 0,9 bis 1,75 mm, weiter insbesondere 1,0 bis 1,5 mm, zum Herstellen eines cellulosischen Formkörpers (102).

## Patentansprüche

1. Ein aus einem Alttextilien und Cellulose-aufweisenden Ausgangsstoff (101) aufbereiteter Cellulose-aufweisender Ausgangsstoff (110) zum Herstellen eines cellulosischen Formkörpers (102), wobei der Cellulose-aufweisende aufbereitete Ausgangsstoff (110) eine mittlere längengewichtete Faserlänge in dem Bereich 0,75 bis 2,5 mm, insbesondere 0,9 bis 1,75 mm, weiter insbesondere 1,0 bis 1,5 mm, aufweist, und wobei der Cellulose-aufweisende aufbereitete Ausgangsstoff (110) ferner nicht-cellulosische Fremdstoffe aus zumindest einem Teil von nicht-cellulosischen Fremdstoffen in dem Alttextilien und Cellulose-aufweisenden Ausgangsstoff (101) aufweist.

2. Der Cellulose-aufweisende aufbereitete Ausgangsstoff (110) gemäß Anspruch 1, wobei der Cellulose-aufweisende aufbereitete Ausgangsstoff (110) einen Anteil von 11% oder weniger, insbesondere 8% oder weniger, weiter insbesondere 5% oder weniger, von Fasern mit einer Länge von weniger als 0,2 mm aufweist.

3. Der Cellulose-aufweisende aufbereitete Ausgangsstoff (110) gemäß Anspruch 1 oder 2, wobei der Cellulose-aufweisende aufbereitete Ausgangsstoff (110) einen Anteil von 17,5% oder weniger, insbesondere 12,5% oder weniger, weiter insbesondere 10% oder weniger, von Fasern mit einer Länge in dem Bereich 2 bis 3,5 mm aufweist.

4. Der Cellulose-aufweisende aufbereitete Ausgangsstoff (110) gemäß einem der Ansprüche 1 bis 3, wobei der Cellulose-aufweisende aufbereitete Ausgangsstoff (110) einen Anteil von 12,5% oder weniger, insbesondere 9% oder weniger, weiter insbesondere 6% oder weniger, von Fasern mit einer Länge von mehr als 3,5 mm aufweist.

5. Der Cellulose-aufweisende aufbereitete Ausgangsstoff (110) gemäß einem der Ansprüche 1 bis 4,
wobei der aufbereitete Cellulose-aufweisende Ausgangsstoff (110) komplett in Einzelfasern desintegriert ist; und/oder
wobei der aufbereitete Cellulose-aufweisende Ausgangsstoff (110) einzelne Cellulose-Fasern, insbesondere im Wesentlichen ausschließlich einzelne Cellulose-Fasern, aufweist.

6. Der Cellulose-aufweisende aufbereitete Ausgangsstoff (110) gemäß einem der Ansprüche 1 bis 5, wobei Fasern im aufbereiteten Cellulose-aufweisenden Ausgangsstoff auf chemische Weise gekürzt sind.

7. Der Cellulose-aufweisende aufbereitete Ausgangsstoff (110) gemäß einem der Ansprüche 1 bis 6, wobei die nicht-cellulosischen Fremdstoffe synthetische Fasern aufweisen.

8. Der Cellulose-aufweisende aufbereitete Ausgangsstoff (110) gemäß Anspruch 7, wobei die synthetischen Fasern zumindest eines der folgenden aufweisen: Polyester, Polyurethan, insbesondere Elastan, Polyamid.

9. Der Cellulose-aufweisende aufbereitete Ausgangsstoff (110) gemäß Anspruch 7 oder 8, wobei die synthetischen Fasern eine vorbestimmte Faserlängenverteilung aufweisen.

10. Der Cellulose-aufweisende aufbereitete Ausgangsstoff (110) gemäß Anspruch 9, wobei die vorbestimmte Faserlängenverteilung der synthetischen Fasern einer vorbestimmten Faserlängenverteilung des Cellulose-aufweisenden aufbereiteten Ausgangsstoffs entspricht.

11. Der Cellulose-aufweisende aufbereitete Ausgangsstoff (110) gemäß Anspruch 9, wobei sich die vorbestimmte Faserlängenverteilung der synthetischen Fasern von einer vorbestimmten Faserlängenverteilung des Cellulose-aufweisenden aufbereiteten Ausgangsstoffs unterscheidet.

12. Verwendung eines Cellulose-aufweisenden aufbereiteten Ausgangsstoffs (110), insbesondere gemäß einem der vorhergehenden Ansprüche 1 bis 11, zur Herstellung eines regenerierten cellulosischen Formkörpers.
